# EUROPÄISCHE PATENTSCHRIFT

(11) **EP 4 198 274 B1**
(45) Veröffentlichungstag und Bekanntmachung des Hinweises auf die Patenterteilung: **12.06.2024**
(21) Anmeldenummer: 22210185.9
(22) Anmeldetag: 29.11.2022
(51) Int. Cl.: F01N 3/20

(54) **HEIZEINRICHTUNG ZUM BEHEIZEN EINES GASSTROMS**
HEATING DEVICE FOR HEATING A GAS FLOW
DISPOSITIF DE CHAUFFAGE POUR CHAUFFER UN COURANT DE GAZ

(30) Priorität: 15.12.2021 DE 102021133353; 05.07.2022 DE 102022116755
(43) Veröffentlichungstag der Anmeldung: 21.06.2023
(73) Patentinhaber: Friedrich Boysen GmbH & Co. KG, 72213 Altensteig (DE)
(72) Erfinder: KNIPPS, Volkmar, 72221 Haiterbach (DE); MÜLLER, Stefan, 72160 Horb-Ihlingen (DE); SAHAN, Ramazan, 72285 Bösingen (DE); SCHUBE, Falko, 72213 Altensteig (DE)
(74) Vertreter: Manitz Finsterwald Patent- und Rechtsanwaltspartnerschaft mbB

(56) Entgegenhaltungen:
- JP-A- H08 218 856
- US-A- 5 597 503
- US-A- 5 614 155
- US-A- 6 166 358
- US-A1- 2021 156 290

## Beschreibung

Die Erfindung betrifft eine Heizeinrichtung zum Beheizen eines Gasstroms, insbesondere eines Abgasstroms einer Brennkraftmaschine.

In vielen Anwendungsfällen ist es erforderlich, einen Gasstrom zu erhitzen, beispielsweise um in selbigem bestimmte Reaktionsbedingungen zu erzeugen. Ein bedeutender Anwendungsfall ist die Abgastechnik, bei der das Augenmerk vermehrt auf einer möglichst effizienten Abgasnachbehandlung liegt. Verschiedene Katalysatoren, die dabei zum Einsatz gelangen, sind erst in einem bestimmten Temperaturfenster effizient betreibbar, das erheblich über der üblichen Umgebungstemperatur liegt. Bei einem Kaltstart einer Brennkraftmaschine treffen deren zunächst vergleichsweise kalten Abgase auf einen ebenfalls vergleichsweise kühlen Katalysatorkörper, so dass die untere Schwellentemperatur des angesprochenen Temperaturfensters oftmals nicht erreicht wird. Dies hat zur Folge, dass die Abgase nicht so vollständig gereinigt werden, wie es wünschenswert ist. Erst mit einer zunehmenden Erwärmung der Abgase und der damit einhergehenden Erwärmung des Katalysatorkörpers kommt das System in den Temperaturbereich, in dem die gewünschten katalytischen Reaktionen effizient ablaufen.

Eine Maßnahme zur Verbesserung des Kaltstartverhaltens einer entsprechenden Abgasanlage besteht darin, vor dem Katalysatorkörper eine Heizeinrichtung vorzusehen, mittels derer das anströmende Abgas erwärmt wird. Dem Abgasstrom wird mit anderen Worten zusätzlich Wärme zugeführt, um das System möglichst schnell auf eine Arbeitstemperatur zu bringen, in der eine effiziente Abgasnachbehandlung sichergestellt ist.

Eine solche Heizeinrichtung kann eine elektrisch beheizbare Scheibe umfassen, die Kanäle aufweist, durch das der Abgasstrom strömt, bevor er dem Katalysatorkörper zugeführt wird. Dabei kommt es zu einem Wärmeübergang von der erhitzten Scheibe auf den Gasstrom. Dieser Gasstrom erwärmt wiederum den Katalysatorkörper, um ihn möglichst schnell auf die erwähnte Arbeitstemperatur zu bringen.

Solche Scheiben sind elektrisch leitfähig und weisen - in Gasstromrichtung gesehen - in der Regel eine mäandrierende Struktur mit - vereinfacht gesagt - in Schlangenlinien angeordneten Segmenten auf, sodass zwischen elektrischen Kontakten der Scheibe eine möglichst lange Heizstrecke entsteht, die sich bei Bestromung aufgrund ihres ohmschen Widerstands schnell erhitzt. Bestimmend für den Widerstand und damit die Heizleistung der Scheibe ist - bei gegebenem Material - nämlich neben dem Querschnitt die Länge des stromführenden Pfades.

Die Integration einer solchen Heizeinrichtung in eine Abgasanlage ist nicht unproblematisch, da die bestrombare Scheibe zuverlässig elektrisch isoliert werden muss. Außerdem muss sichergestellt sein, dass auch bei Betrieb der Abgasanlage ein unbeabsichtigter Kurzschluss zwischen den einzelnen Segmenten der Scheibe vermieden wird. Überdies muss die Heizeinrichtung robust sein und Schwingungsbelastungen und einer hohen thermischen Beanspruchung standhalten können. Dies gilt auch für Heizeinrichtungen der vorstehend beschriebenen Art, die in anderen Bereichen zum Einsatz gelangen.

Bisher bekannte Heizeinrichtungen sind oftmals nicht hinreichend zuverlässig und/oder aufwendig aufgebaut, sodass Bedarf nach einer verbesserten Lösung besteht, die gleichzeitig zuverlässig und einfach aufgebaut ist. Die Druckschrift JP H08 218856 A offenbart eine Heizeinrichtung gemäß dem Oberbegriff des Anspruchs 1. Die Druckschriften US 5 597 503 A, US 2021/156290 A1, US 6 166 358 A und US 5 614 155 A offenbaren weitere beispielhafte Heizeinrichtungen.

Die Lösung dieser Aufgabe erfolgt durch eine Heizeinrichtung mit den Merkmalen des Anspruchs 1.

Die erfindungsgemäße Heizeinrichtung umfasst ein in axialer Richtung von dem Gasstrom durchströmbares, elektrisch leitfähiges Heizelement, das zumindest zwei Heizsegmente aufweist, die abschnittsweise durch einen Spalt voneinander getrennt sind, der insbesondere einseitig offen ist. Die Segmente sind dabei selbst bevorzugt von Gas durchströmbar. D. h. nicht der gesamte Gasstrom strömt bei Betrieb durch den zumindest einen Spalt, sondern auch durch die Segmente. Zu diesem Zweck können die Heizsegmente Kanäle aufweisen, deren Wandungen einen effizienten Übertrag von Wärme von dem leitfähigen Material des Heizelements auf das Gas ermöglichen.

Ferner ist eine Trägereinrichtung mit zumindest einem elektrisch isolierendem Trägerelement vorgesehen, dass einen Randbereich zumindest einer axialen Stirnseite des Heizelements zumindest abschnittsweise abdeckt, wobei das Trägerelement zumindest einen Abstandsabschnitt aufweist, der in den Spalt ragt.

Die Heizsegmente sind elektrisch miteinander verbunden. Der Abstandsabschnitt ist jedoch so bemessen, dass er die einander gegenüberliegenden Seiten der Heizsegmente, die den Spalt begrenzen, zuverlässig voneinander trennt, sodass ein unerwünschter elektrischer Kurzschluss durch Vibrationen und/oder thermische Ausdehnung in nicht vorgesehenen Bereichen der Heizsegmente zuverlässig verhindert wird. Es ist nicht erforderlich, dass der gesamte Spalt durch den Abstandsabschnitt ausgefüllt wird. Es kann durchaus ausreichend sein, einen vergleichsweise kleinen Abstandsabschnitt vorzusehen, der insbesondere in einen Endabschnitt des Spalts ragt. Bevorzugt liegen die Seiten der Heizsegmente bereits in einem kalten Zustand der Heizeinrichtung an dem Abstandsabschnitt an.

Außerdem weist die erfindungsgemäße Heizeinrichtung einen Gehäuseabschnitt auf, in dem das Heizelement und die Trägereinrichtung gehalten sind. Insbesondere isoliert die Trägereinrichtung den Gehäuseabschnitt elektrisch gegenüber dem Heizelement.

Der Gehäuseabschnitt u.a. zur Sicherung des Ensembles aus Heizelement und Trägereinrichtung, so dass auch bei einer thermischen und/oder mechanischen Beanspruchung der Heizeinrichtung deren Funktionsfähigkeit zuverlässig gewährleistet ist. Außerdem erleichterte der Gehäuseabschnitt die Montage der Heizeinrichtung in einer gasführenden Anlage. Bei geeigneter Ausgestaltung kann die Heizeinrichtung auch vormontiert werden, sodass sie als Ganzes in einer Anlage verbaut werden kann.

Weitere Ausführungsformen der Erfindung sind in der Beschreibung, den Ansprüchen und den beigefügten Zeichnungen angegeben.

Gemäß einer Ausführungsform erstreckt sich der Abstandsabschnitt in axialer Richtung und/oder einer Richtung senkrecht zu der axialen Richtung von dem Trägerelement in den Spalt.

Das Trägerelement kann ringartig ausgestaltet sein oder eine Grundform eines Kreissegments aufweisen. Beispielsweise ist das Trägerelement ein Ring oder ein Ringabschnitt, der auf eine der Stirnseiten des Heizelements aufgebracht wird, falls dieser eine kreisförmige Kontur aufweist. Es versteht sich, dass das Heizelement auch andere Formen annehmen kann (z.B. oval, rechteckig, polygonal). Das Trägerelement ist dann komplementär ausgestaltet. Es kann auch vorgesehen sein, dass das Trägerelement auf die Umfangsfläche des Heizelements aufgebracht wird. Auch in diesem Fall die Formgebung des Heizelements und des Trägerelements komplementär. Die beiden vorstehend beschriebenen Konzepte können kombiniert werden.

Gemäß einer weiteren Ausführungsform ist die Trägereinrichtung mehrstückig ausgebildet. Beispielsweise umfasst die Trägereinrichtung ein erstes Trägerelement und ein zweites Trägerelement, die jeweils zumindest einen Teil des Umfangs des Heizelements umgegeben und/oder die jeweils zumindest einen Teil eines Randbereichs zumindest einer Stirnseite des Heizelements abdecken. Es ist beispielsweise denkbar, dass das erste Trägerelement und das zweite Trägerelement jeweils ringförmig sind und jeweils einen äußeren Randbereich der beiden Stirnseiten abdecken.

Es ist auch denkbar, eine Mehrzahl von Trägerelementen vorzusehen, die jeweils nur einen Abstandsabschnitt aufweisen. Ein den Randbereich zumindest einer axialen Stirnseite des Heizelements zumindest abschnittsweise abdeckender Abschnitt und/oder ein das Heizelement zumindest abschnittsweise in Umfangsrichtung umgebender Abschnitt derartiger Trägerelemente können vergleichsweise kurz ausgestaltet sein. Trägerelemente gleicher oder unterschiedlicher Bauweise oder Dimensionierung können kombiniert werden, um eine für den jeweiligen Anwendungsfall geeignete Trägereinrichtung zu bilden.

Kosteneinsparungen hinsichtlich Herstellung und Montage ergeben sich, wenn das erste und das zweite Trägerelement Gleichteile sind.

Eine weitere Maßnahme zur Verbesserung der Fixierung des Heizelements besteht darin, dieses über zumindest eine Lagermatte an dem Gehäuseabschnitt abzustützen. Bevorzugt erfolgt eine Abstützung in axialer Richtung, insbesondere in beiden axialen Richtungen (z.B. durch separate oder ein gemeinsame Lagermatte), sodass das Heizelement im Wesentlichen axialfest gesichert werden kann, gleichzeitig aber auch Schwingungen und/oder thermische Ausdehnungen aufgenommen, kompensiert und/oder gedämpft werden können. Obige Ausführungen gelten in analoger Weise für die Trägereinrichtung. Sie kann sich ebenfalls über zumindest eine Lagermatte an dem Gehäuseabschnitt abstützen, insbesondere in axialer Richtung.

Als Lagermatten eignen sich insbesondere Faserstoffmatten, beispielsweise aus einem polykristallinen Material.

Die vorstehend beschriebenen Abstützungskonzepte mittels Lagermatten lassen sich auch kombinieren. Beispielsweise steht eine Stirnseite des Heizelements nur über eine Lagermatte in Kontakt mit dem Gehäuseabschnitt, während deren andere Stirnseite an der Trägereinrichtung anliegt, die sich wiederum axial über eine Lagermatte an dem Gehäuseabschnitt abstützt.

Um eine thermische Ausdehnung des Heizelements aufnehmen zu können, kann zwischen der Trägereinrichtung und/oder dem Heizelement einerseits und dem Gehäuseabschnitt andererseits in radialer Richtung zumindest in einem kalten Zustand des Heizelements ein Spiel bestehen. Beispielsweise wird das Spiel durch einen radialen Spalt bereitgestellt, der lediglich mit Luft oder einer nicht oder wenig stark zusammengepressten Lagermatte ausgefüllt ist.

Wie eingangs bereits erwähnt wurde, sind die Heizsegmente des Heizelements bevorzugt gasdurchlässig. Eine wabenförmige Grundstruktur des Heizelements mit einer Vielzahl von gasführenden Kanälen ermöglicht einen effizienten Wärmeübergang und erzeugt vergleichsweise wenig Gegendruck.

Insbesondere weist das Heizelement eine Mehrzahl von Spalten auf, die bevorzugt parallel angeordnet sind und/oder die sich in einer Richtung parallel zu einer Stirnseite des Heizelements alternierend von einander gegenüber liegenden Seiten des Heizelements in dessen Inneres ragen. Die Spalte sind dabei einseitig offen. Dadurch wird eine mäandrierende Struktur mit einer langen Heizstrecke erzeugt. Die Fläche der Spalte ist in einer Draufsicht auf die von dem Gasstrom angeströmte Seite des Heizelements wesentlich kleiner als die der Heizsegmente. Der Löwenanteil des Gasstroms strömt somit durch die Heizsegmente, wo ein besonders effizienter Wärmeübertrag stattfindet.

Konstruktiv einfach umzusetzen ist eine axiale Sicherung des Heizelements, bei der der Gehäuseabschnitt zumindest eine axiale Schulter aufweist, an der sich das Heizelement - mittelbar oder unmittelbar - in axialer Richtung abstützt.

Der Gehäuseabschnitt kann mehrteilig ausgebildet sein. Beispielsweise umfasst der Gehäuseabschnitt ein erstes Gehäuseelement und ein zweites Gehäuseelement, zwischen denen die Trägereinrichtung mit dem Heizelement gehalten sind.

Das erste Gehäuseelement und/oder das zweite Gehäuseelement und/oder die Trägereinrichtung und/oder das erste Trägerelement und/oder das zweite Trägerelement können in einem Querschnitt L-förmig ausgebildet sein. Derartige Bauteile lassen sich einfach fertigen.

Die Heizeinrichtung lässt sich mit wenig Aufwand in eine gasführende Anlage integrieren, wenn das erste Gehäuseelement und/oder das zweite Gehäuseelement einen Anschlussabschnitt aufweisen, mittels derer der Gehäuseabschnitt mit weiteren gasführenden Komponenten verbindbar ist.

Eine kompakte und einfach zu montierende Ausführungsform sieht vor, dass das erste Gehäuseelement in das zweite Gehäuseelement eingesteckt ist.

Es kann vorgesehen sein, dass das erste Gehäuseelement und/oder das zweite Gehäuseelement Blechbauteile sind. Ein geeigneter Werkstoff hierfür ist beispielsweise Edelstahl. Das erste Gehäuseelement und/oder das zweite Gehäuseelement können auch Gussteile sein.

Das erste Gehäuseelement und/oder das zweite Gehäuseelement können einen Ringabschnitt mit zumindest einem sich in axialer Richtung erstreckenden Laschenabschnitt umfassen. Die Laschenabschnitte der beiden Gehäuseelemente können sich in einem montierten Zustand überlappen oder auf Stoß miteinander verbunden sein.

Zum Zwecke einer Versorgung des Heizelements mit elektrischer Energie können der Gehäuseabschnitt eine erste und eine zweite Kontaktöffnung aufweisen, durch die das Heizelement elektrisch kontaktierbar ist. Entsprechende Anschlüsse sind mit einer Steuereinrichtung zum Betrieb der Heizeinrichtung verbunden. Diese können wiederum mit einer Steuereinheit des Motors verbunden sein oder in diese integriert sein. Bei Ausführungsformen der Gehäuseteile mit Laschenabschnitten sind in vielen Fällen derartige Kontaktöffnungen entbehrlich, da das Heizelement durch zwischen den Laschenabschnitten angeordnete Freischnitte zugänglich ist. Bei gegebenen Gehäuseteilen mit einer Mehrzahl von (evtl. gleichverteilten) Freischnitten wird daher eine große Flexibilität hinsichtlich der Geometrie der Herstellung eines Kontakts mit dem Heizelement erzielt. Die Anzahl und/oder Geometrie der Laschenabschnitte und/oder der Freischnitte kann bedarfsgerecht gewählt werden.

Ganz grundsätzlich gilt, dass die Gehäuseabschnitte auf beliebige Weise miteinander verbunden sein können, beispielsweise durch Schweißen. Auch eine kraftschlüssige Verbindung (z.B. Steckverbindung) ist denkbar.

Der Gehäuseabschnitt kann von einem Außengehäuse gehalten sein, das den Gehäuseabschnitt in radialer Richtung umgibt. Das Außengehäuse kann ein rohrförmiger Abschnitt einer Komponente einer Abgasanlage sein. Das Außengehäuse kann auch ein erstes Außengehäuseelement und ein zweites Außengehäuseelement umfassen, insbesondere wobei das erste Außengehäuseelement und das zweite Außengehäuseelement Blechbauteile sind. Das erste Außengehäuseelement und das zweite Außengehäuseelement können beispielsweise Gehäuseschalen sein.

Bei dieser Ausgestaltung ist es beispielsweise möglich, das Heizelement mitsamt der Trägereinrichtung in dem Gehäuseabschnitt vormontiert werden. Dann wird das Außengehäuse montiert und das gesamte "Paket" in einer Abgasanlage verbaut.

Der Gehäuseabschnitt kann punktuell, abschnittsweise oder entlang einer im Wesentlichen durchgehenden Verbindungslinie mit dem Außengehäuse verbunden sein, z.B. verschweißt oder geheftet.

Das Trägerelement ist bevorzugt zumindest abschnittsweise, insbesondere vollständig aus Korund (Al₂O₃) und/oder einem elektrisch isolierenden Keramikwerkstoff bzw. einer technischen Keramik gefertigt. Auch eine Glaskeramik oder Glimmer enthaltende Werkstoffe können geeignet sein. Das Heizelement ist bevorzugt zumindest abschnittsweise, insbesondere vollständig aus einem metallischen Werkstoff gefertigt und/oder weist zumindest abschnittsweise eine metallische Beschichtung auf.

Die vorliegende Erfindung betrifft ferner eine Abgasbehandlungseinrichtung mit einem Einlass und einem Auslass und mit zumindest einer Abgasbehandlungseinheit zur Behandlung eines Abgasstroms, insbesondere mit einer Katalysatoreinheit oder Filtereinheit, wobei eine Heizeinrichtung gemäß zumindest einer der vorstehend beschriebenen Ausführungsformen zwischen dem Einlass und der Abgasbehandlungseinheit angeordnet ist, insbesondere unmittelbar in Strömungsrichtung des Abgases vor der Abgasbehandlungseinheit.

Die Abgasbehandlungseinrichtung kann ein einstückiges Gehäusebauteil aufweisen, das die Abgasbehandlungseinheit und die Heizeinrichtung aufnimmt.

Alternativ bildet der Gehäuseabschnitt der Heizeinrichtung einen Teil eines Gehäuses der Abgasbehandlungseinrichtung, insbesondere wobei der Einlass der Abgasbehandlungseinrichtung mit einem Bauteil des Gehäuseabschnitts verbunden ist.

Die vorliegende Erfindung betrifft außerdem eine Abgasanlage einer Brennkraftmaschine mit einer Abgasbehandlungseinrichtung gemäß zumindest einer der vorstehend beschriebenen Ausführungsformen.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1 und 2: eine nicht erfindungsgemäße Ausführungsform des Heizelements und der Trägereinrichtung,
- Fig. 3: die Ausführungsformen der Fig. 1 und 2, die mit ringförmigen Lagermatten versehen wurden,
- Fig. 4: eine erste Ausführungsform der erfindungsgemäßen Heizeinrichtung,
- Fig. 5 und 6: eine zweite Ausführungsform des Heizelements und der Trägereinrichtung,
- Fig. 7: die Ausführungsformen der Fig. 5 und 6, die mit ringförmigen Lagermatten versehen wurden,
- Fig. 8 bis 10: eine dritte Ausführungsform des Heizelements und der Trägereinrichtung,
- Fig. 11 bis 13: eine zweite Ausführungsform der erfindungsgemäßen Heizeinrichtung in einer Schnittansicht, in einer perspektivischen Ansicht bzw. in einer Explosionsdarstellung,
- Fig. 14 und 15: eine dritte Ausführungsform der erfindungsgemäßen Heizeinrichtung in einer Schnittansicht bzw. in einer perspektivischen Schnittansicht,
- Fig. 16 und 17: einen Teil einer Ausführungsform einer Abgasbehandlungseinrichtung in einer Schnittansicht bzw. in einer perspektivischen Ansicht,
- Fig. 18 und 19: einen Teil einer weiteren Ausführungsform einer Abgasbehandlungseinrichtung in einer Schnittansicht bzw. in einer perspektivischen Ansicht,
- Fig. 20 bis 23: weitere Ausführungsformen der erfindungsgemäßen Heizeinrichtung (jeweils in einer Schnittansicht) und
- Fig. 24: einen Teil noch einer weiteren Ausführungsform einer Abgasbehandlungseinrichtung in einer Schnittansicht,
- Fig. 25 bis 27: eine erste Ausführungsform der Gehäuseteile mit Laschenabschnitten in verschiedenen Ansichten,
- Fig. 28 bis 30: eine Ausführungsform eines Außengehäuses in verschiedenen Ansichten,
- Fig. 31 bis 34: eine zweite Ausführungsform der Gehäuseteile mit Laschenabschnitten in verschiedenen Ansichten
- Fig. 35: eine dritte Ausführungsform der Gehäuseteile mit Laschenabschnitten,
- Fig.36 und 37: weitere Ausführungsformen der erfindungsgemäßen Heizeinrichtung (jeweils in einer Schnittansicht)
- Fig. 38 bis.41: beispielhafte Variationsmöglichkeiten der Anschlussgeometrie und
- Fig. 42 bis 45: weitere Ausführungsformen der Trägereinrichtung mit jeweils einer Mehrzahl von Trägerelementen.

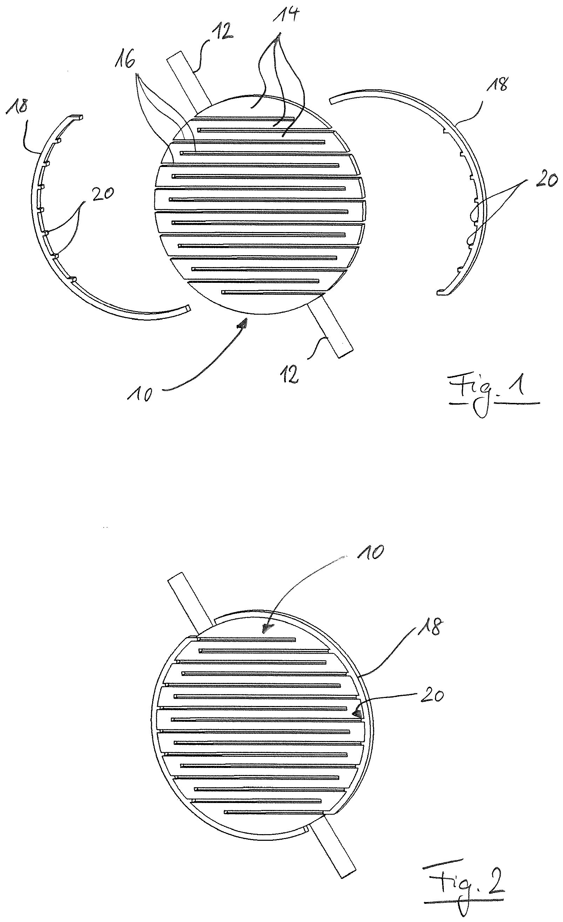

Fig. 1 zeigt eine Heizscheibe 10, die im vorliegenden, nicht erfindungsgemäßen Ausführungsbeispiel in axialer Sicht kreisförmig ausgestaltet ist. Grundsätzlich sind ihre Außenkontur und axiale Dicke frei wählbar und können an die jeweils vorliegenden Anforderungen angepasst werden.

Die Heizscheibe 10 besteht zumindest teilweise aus einem elektrisch leitenden Material und/oder ist mit einem solchen zumindest teilweise beschichtet, so dass sie bei einer Bestromung mittels elektrischen Anschlüssen 12 aufgeheizt wird (Widerstandsheizung). Zur Ausbildung eines geeignet hohen elektrischen Widerstandes der Heizscheibe 10 weist diese parallel verlaufende Spalte 16 auf, die einzelne Heizsegmente 14 abschnittsweise voneinander trennen. Die Spalte 16 sind alternierend seitlich offen (in Fig. 1 abwechselnd am rechten und linken Rand der Scheibe 10). Bildlich gesprochen wird hierdurch eine mäandrierende oder schlangenlinienförmige Struktur erzeugt.

Die Heizsegmente 14 stellen keinen undurchdringlichen Strömungswiderstand dar, sondern weisen eine Vielzahl feiner axialer Kanäle (nicht gezeigt) auf, durch die ein eine Stirnseite der Heizscheibe 10 axial anströmender Gasstrom treten kann. Als besonders geeignet hat es sich erwiesen, wenn die Heizsegmente 14 eine wabenförmige Grundstruktur aufweisen. Eine derartige Grundstruktur weist eine hohe Zahl von Kanälen auf und stellt daher eine große Oberfläche bereit, die den Wärmeaustausch zwischen der Heizscheibe 10 und dem Gasstrom fördert.

Bei dem Betrieb der Heizscheibe 10 dehnt diese sich aufgrund thermischer Effekte aus, was dazu führen kann, dass benachbarte Heizsegmente 14 sich in nicht vorgesehenen Bereichen berühren und hierdurch ein elektrischer Kurzschluss erzeugt wird. Mechanische Belastungen und Vibrationen, wie sie beispielsweise bei einem Einsatz in einem Kraftfahrzeug typischerweise auftreten, können ähnliche Probleme mit sich ziehen.

Hier wird Abhilfe geschaffen, indem die Heizscheibe 10 von einer Trägereinrichtung getragen wird, die im gezeigten Beispiel zwei separate Trägerelemente 18 umfasst. Die Trägerelemente 18 sind gleichartige Kreissegmente (Gleichteile), die an die Geometrie der Außenkontur der Heizscheibe 10 angepasst sind. Sie weisen an ihrer konkaven Innenseite jeweils Abstandshalter 20 auf, die komplementär zu den ihnen jeweils zugeordneten Spaltöffnungen ausgebildet sind. Wenn die Trägerelemente 18 an der Heizscheibe 10 montiert sind (siehe Fig. 2), ragen die Abstandshalter 20 in die offenen Enden der Spalte 16. Dadurch wird sichergestellt, dass benachbarte Heizsegmente 14 auch bei Vibrationen/Schwingbelastung und/oder einer thermischen Ausdehnung zuverlässig voneinander beanstandet bleiben. Außerdem umgeben die Trägerelemente 18 die Heizscheibe 10 fast vollständig in Umfangsrichtung. Lediglich im Bereich der Anschlüsse 12 sind Lücken vorgesehen. Durch die fast vollständige Umfassung der Heizscheibe 10 durch die Trägerelemente 18 wird diese auch in radialer Richtung isoliert. Abweichend von dem dargestellten Ausführungsbeispiel können die Trägerelemente 18 (abschnittsweise) eine größere axiale Dicke aufweisen als die Heizscheibe 10, um auch als Abstandshalter in axialer Richtung fungieren zu können.

Um eine gute elektrische Isolierung zu erzielen, sind die Trägerelemente 18 aus Korund, Glaskeramik, Glimmer und/oder einem keramischen Werkstoff.

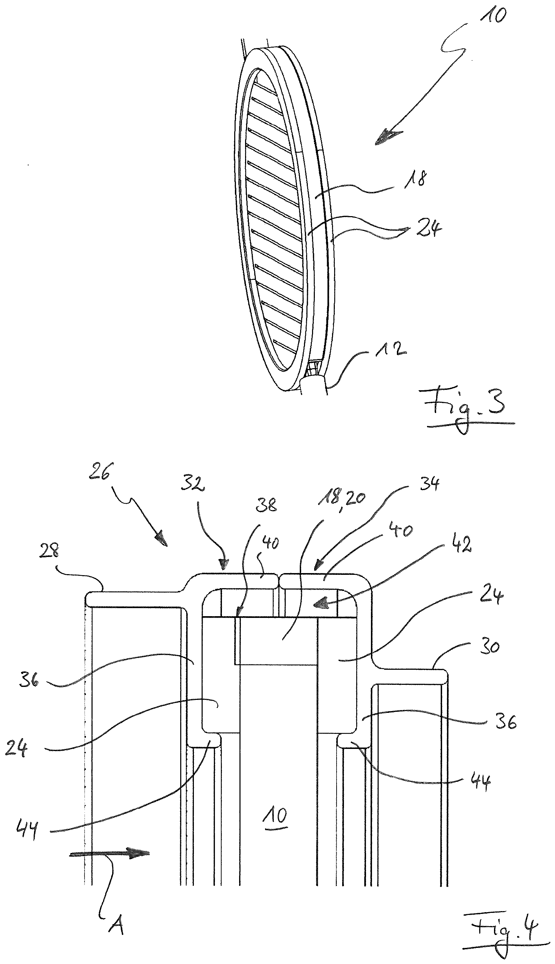

Fig. 3 zeigt eine Perspektivansicht des Ausführungsbeispiels gemäß Fig. 1 und 2, wobei auf die Stirnseiten der Trägerelemente 18 ringförmige Lagermatten 24 aufgebracht wurden. Diese decken Randbereiche der Stirnseiten der Heizscheibe 10 ab.

Fig. 4 zeigt eine Heizeinrichtung 26 in einer Schnittansicht, in der die anhand der Figuren 1, 2 und 3 beschriebenen Komponenten verbaut wurde. Die Heizeinrichtung 26 weist einen Einlass 28 und einen Auslass 30 auf. Das Abgas strömt in axialer Richtung A durch den Einlass 28 in die Heizeinrichtung 26 ein und trifft auf eine einlassseitige Stirnseite der Heizscheibe 10. Der Gasstrom strömt in vorstehend beschriebener Weise durch die Heizscheibe 10 und tritt an ihrer auslassseitigen Stirnseite aus dieser aus, bevor er durch den Auslass 30 aus der Heizeinrichtung 26 strömt. Grundsätzlich ist es gleichermaßen möglich, dass der Gasstrom in entgegengesetzter Richtung die Heizeinrichtung 26 durchströmt.

Der Einlass 28 und der Auslass 30 können mit weiteren gasführenden Komponenten verbunden sein, beispielsweise mit einem nicht gezeigten Einlasstrichter bzw. mit einem Gehäusebauteil, das eine Abgasreinigungskomponente, wie beispielsweise einen Katalysator umgibt. Die genannten Komponenten können in oder auf den Einlass 28 und/oder den Auslass 30 eingesteckt bzw. aufgesteckt werden. Anschließend wird eine Schweißverbindung oder eine andere Art einer Verbindung hergestellt, um die Komponenten und die Heizeinrichtung 26 gasdicht miteinander zu verbinden.

Die in Fig. 4 gezeigten Konstruktion ist zwischen zwei Gehäuseteilen 32, 34, die auch den Einlass 28 bzw. den Auslass 30 aufweisen und die gasdicht miteinander verbunden - bevorzugt verschweißt - sind, angeordnet und axial gesichert. Die Gehäuseteile 32, 34 weisen jeweils eine axiale Schulter 36 auf, durch die die Lagermatten 24 gegen die Heizscheibe 10 und die Trägerelemente 18 gepresst werden. Die Eigenschaften der Lagermatten 24 sind derart, dass einerseits eine thermische Ausdehnung der Heizscheibe 10 in axialer Richtung A aufgenommen werden kann und andererseits mechanische Vibrationen/Schwingungen gedämpft werden. Dabei spielen nicht nur die mechanischen Eigenschaften der Lagermatten 24 sondern auch Stärke ihrer Verpressung eine Rolle.

In dem Ausführungsbeispiel gemäß Fig. 4 unterscheiden sich die Gehäuseteile 32, 34, insbesondere hinsichtlich der Ausgestaltung des Einlasses 28 bzw. des Auslasses 30. Der Einlass 28 und der Auslass 30 können aber auch im Wesentlichen identisch ausgebildet sein, so dass die Gehäuseteile 32, 34 Gleichteile sind.

Da die Trägerelemente 18 etwas dicker sind als die Heizscheibe 10, wird der entsprechende axiale Überstand 38 in die einlassseitig angeordnete Lagermatten 24 gedrückt, was die lokale Verpressung der Lagermatten 24 erhöht und letztlich auch die Fixierung des Verbunds aus Trägerelementen 18 und Heizscheibe 10 verbessert. Der axiale Überstand 38 kann beispielsweise in einer Größenordnung von 0,5 bis 1 mm liegen. In gewissen Anwendungsfällen kann auf einen axialen Überstand 38 auch verzichtet werden oder dieser wird größer gewählt, falls es erforderlich sein sollte.

Zwischen dem Außenumfang der Trägerelemente 18 und der Lagermatten 24 einerseits und Axialabschnitten 40 der Gehäuseteilen 32, 34 ist ein Luftspalt 42 vorgesehen, um eine Ausdehnung des Verbundes aus Heizscheibe 10 und Trägerelementen 18 aufgrund thermischer Effekte aufzunehmen.

Fortsätze 44, die sich in axialer Richtung von den axialen Schultern 36 erstrecken, sichern die Lagermatten 24 nach radial innen. In vielen Fällen ist eine solche Sicherung nicht erforderlich, so dass auf die Fortsätze 44 verzichtet werden kann.

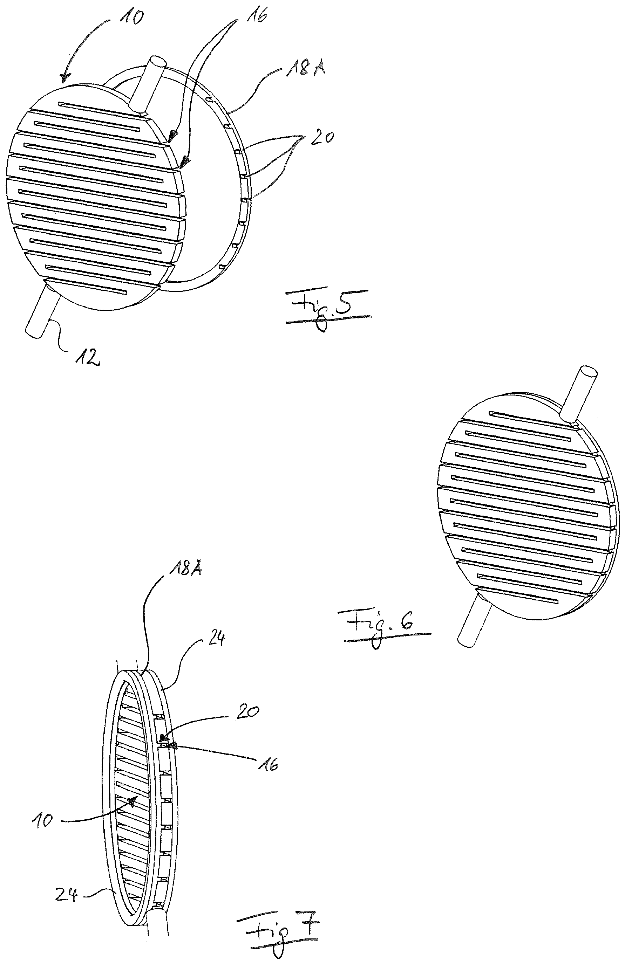

Die in den Fig. 5 bis 7 gezeigte Heizscheibe 10 entspricht der der Fig. 3 und 4. Anstelle kreissegmentförmiger Trägerelemente ist in dem hier gezeigten Ausführungsbeispiel ein Trägerring 18A vorgesehen. Der Trägerring 18A weist Abstandshalter 20 auf, die sich in axialer Richtung von diesem erstrecken und in montiertem Zustand (vgl. Fig. 6 und 7) in die offenen Enden der Spalte 16 der Heizscheibe 10 ragen. Der Trägerring 18A deckt einen Randbereich der Stirnseite der Heizscheibe 10 ab.

In Fig. 7 ist zu sehen, dass auf den Trägerring 18A eine ringförmige Lagermatten 24 aufgebracht wurde. Eine solche Matte 24 befindet sich auch auf der gegenüberliegenden Stirnseite der Heizscheibe 10. Umfangsseitig ist die Heizscheibe 10 nicht von einem Abschnitt des Trägerrings 18A umgeben. Eine elektrische Isolierung ist trotzdem gegeben, da die Lagermatten 24 aus elektrisch isolierendem Material besteht und da bei einer geeigneten Ausgestaltung der Gehäuseteilen 32, 34 ein isolierender Luftspalt vorhanden ist (vgl. Ausführungsbeispiel gemäß Fig. 4).

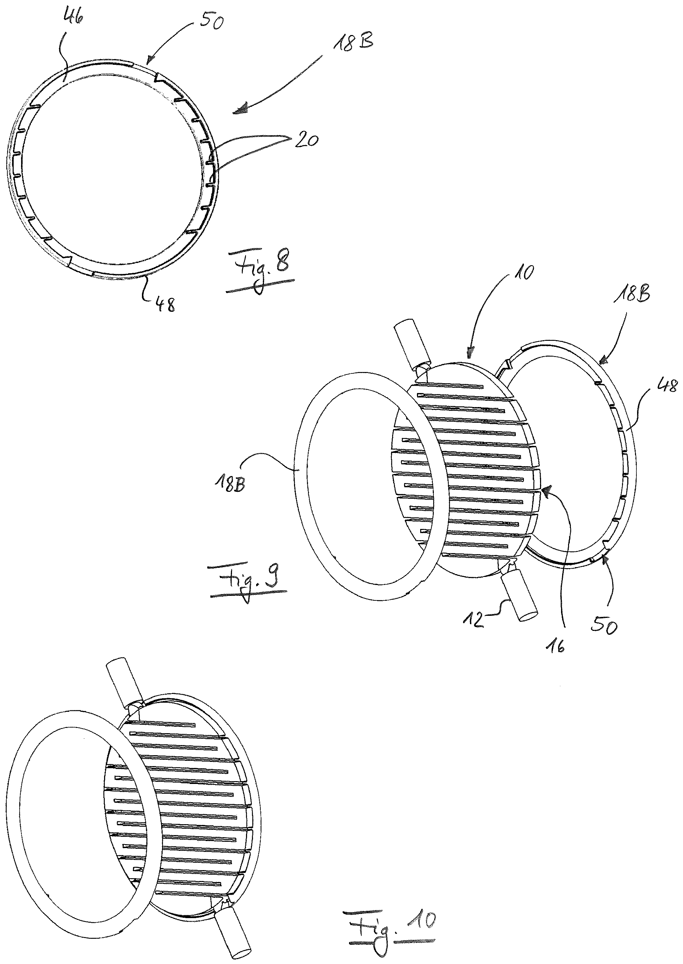

Fig. 8 zeigt einen Trägerring 18B, der auf eine Anlagefläche 46 aufweist, von dessen Rand sich eine Umfangswand 48 in axialer Richtung erstreckt. Der Trägerring 18B weist ferner Abstandshalter 20 auf, die sich ebenfalls von der Anlagefläche 46 in axialer Richtung erstrecken und die mit der Umfangswand 48 in Verbindung stehen. Die Umfangswand 48 weist Anschlussausnehmungen 50 für die Anschlüsse 12 auf.

Die Heizscheibe 10 wird beidseitig von jeweils einem Trägerring 18B eingefasst, wie den Figuren 9 und 10 zu entnehmen ist. Die Trägerringe 18B sind in diesem Beispiel Gleichteile, können bei Bedarf aber auch unterschiedlich ausgestaltet sein. In einem montierten Zustand der Trägerringe 18B greifen deren Abstandshalter 20 in die offenen Enden der Spalte 16 der Heizscheibe 10 ein. Außerdem wird die Heizscheibe 10 umfangsseitig von den Umfangswänden 48 umgriffen, wodurch eine Isolierung bereitgestellt wird.

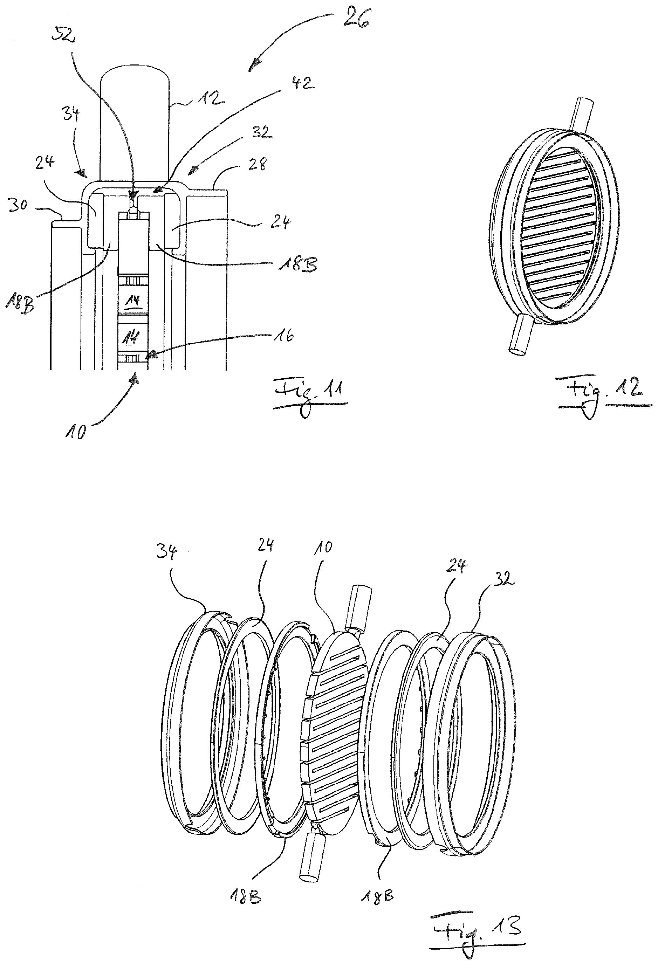

Fig. 11 zeigt eine Heizeinrichtung 26 in einer Schnittansicht, in der die anhand der Figuren 8, 9 und 10 beschriebenen Komponenten verbaut wurden. Fig. 12 zeigt eine Perspektivansicht der Heizeinrichtung 26, Fig. 13 eine Explosionsansicht ihrer Komponenten.

Die Heizscheibe 10 ist beidseitig durch Trägerringe 18B eingefasst, die sich wiederum jeweils über Lagermatten 24 an den Gehäuseteilen 32, 34 abstützen. Radial außerhalb der Trägerringe 18B ist ein Luftspalt 42 vorgesehen. Die Trägerringe 18B sind an der Stirnfläche voneinander beabstandet (d.h. sie berühren sich zumindest in einem kalten Zustand nicht, siehe Abstand 52), um Bauteiltoleranzen und/oder thermische Ausdehnungen auszugleichen bzw. zu kompensieren und so eine sichere Lagerung der Scheibe 10 zu gewährleisten

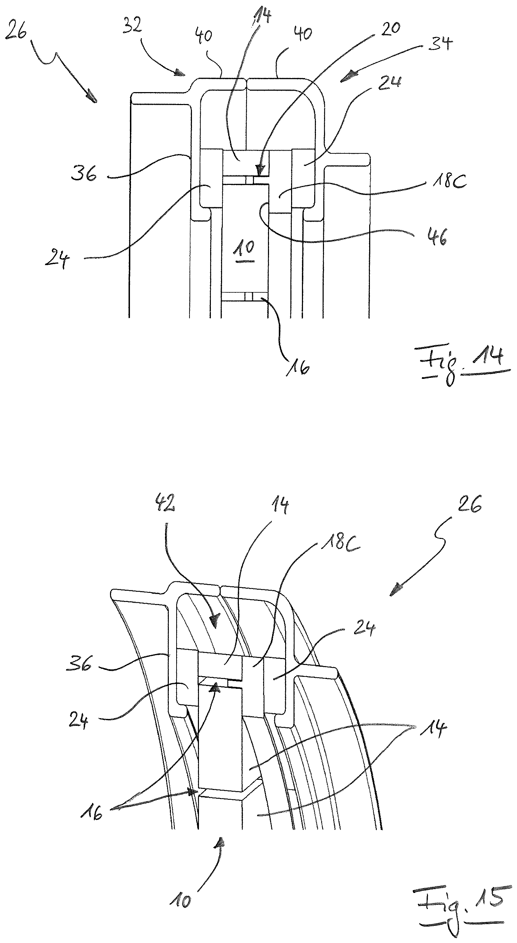

Fig. 14 und 15 zeigen eine Heizeinrichtung 26 in einer Schnittansicht bzw. in einer perspektivischen Schnittansicht. Hier ist ein Trägerring 18C mit einer Anlagefläche 46 zur Anlage an einer Stirnseite der Heizscheibe 10 vorgesehen, von der sich in axialer Richtung Abstandshalter 20 in die offenen Enden der Spalte 16 der Heizscheibe 10 erstrecken.

Es ist ferner gut zu erkennen, dass die Abstandshalter 20 nur über einen Teil der axialen Erstreckung der Spalte 16 in diese ragen. Außerdem ist zu erkennen, dass zwischen der einlassseitigen Stirnseite der Heizscheibe 10 und der entsprechenden axialen Schulter 36 lediglich die Lagermatte 24 und kein Trägerelement oder Trägerring angeordnet ist (obwohl dies grundsätzlich möglich wäre). Eine elektrische Isolierung zwischen der Heizscheibe 10 und dem Gehäuseteil 32 ist trotzdem gegeben, da das Material der Lagermatten 24 elektrisch isolierende Eigenschaften aufweist.

Alternativ ist es möglich, die Abstandshalter 20 so auszubilden, dass sie sich in axialer Richtung vollständig durch die Spalte 16 erstrecken oder sogar aus der gegenüberliegenden Stirnseite der Heizscheibe 10 herausragen.

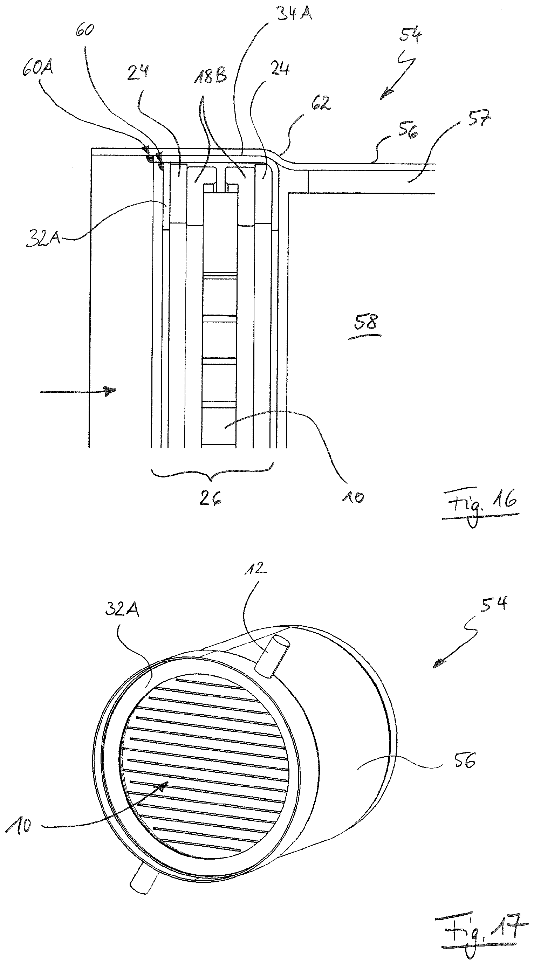

Die Fig. 16 und 17 zeigen einen Teil einer Abgasbehandlungseinrichtung 54 mit einer Heizeinrichtung 26 in einer Schnittansicht bzw. in einer perspektivischen Ansicht. Die Heizeinrichtung 26 ist in einem Blechgehäuse 56 gehalten, das auch einen Katalysator 58 und/oder ein Filterelement enthält. Der Katalysator 58 wird durch zumindest eine Lagermatte 57, die bevorzugt eine Quellmatte ist, in dem Gehäuse 56 zuverlässig fixiert.

Von links in das Blechgehäuse 56 einströmende Abgas (Pfeil) wird durch die Heizeinrichtung 26 erhitzt, sodass der Katalysator 58 möglichst schnell seine Betriebstemperatur erreicht.

Die Heizeinrichtung 26 umfasst in dem gezeigten Ausführungsbeispiel den bereits anhand der Fig. 8 bis 13 beschriebenen Aufbau oder Verbund aus Heizscheibe 10, Trägerringen 18B und Lagermatten 24. Unterschiede ergeben sich jedoch in der Konstruktion der sie einfassenden Gehäuseteile 32A, 34A. Das Gehäusebauteil 34A ist ringförmig ausgestaltet und weist im Querschnitt eine L-Form auf. Der vorstehend beschriebene Aufbau wird in das Gehäuseteil 34A eingeschoben, bis er an dessen axialer Schulter 36 anliegt. Anschließend wird das als ebener Ring ausgebildete Gehäuseteil 32A eingesteckt und mit einer geeigneten Kraft beaufschlagt, so dass die gewünschte Verpressung der Lagermatten 24 erreicht wird. Eine Fixierung erfolgt dann durch ein Verschweißen der Gehäuseteile 32A, 34A (siehe Schweißnaht 60).

Die so erhaltene Heizeinrichtung 26 wird anschließend von links in das Blechgehäuse 56 eingeführt, bis sie an einer Schulter 62 des Blechgehäuse 56 anliegt. Die Fixierung der Heizeinrichtung 26 erfolgt mittels einer weiteren Schweißnaht 60A.

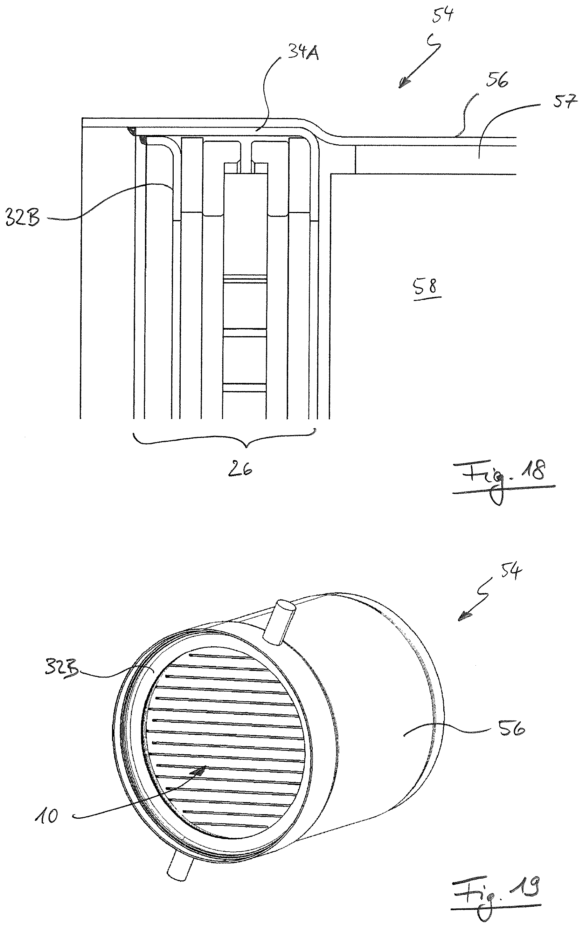

Die Fig. 18 und 19 zeigen einen Teil einer Abgasbehandlungseinrichtung 54 mit einer Heizeinrichtung 26 in einer Schnittansicht bzw. in einer perspektivischen Ansicht. Diese Abgasbehandlungseinrichtung 54 gleicht in weiten Teilen der der Fig. 18 und 19. Anstelle des ebenen Rings 32A wird hier jedoch ein L-förmiges Gehäuseteil 32B verwendet. Dieses lässt sich einfacher in das Gehäuseteil 34A einführen, da sein sich in axialer Richtung erstreckender Abschnitt als Führung wirkt.

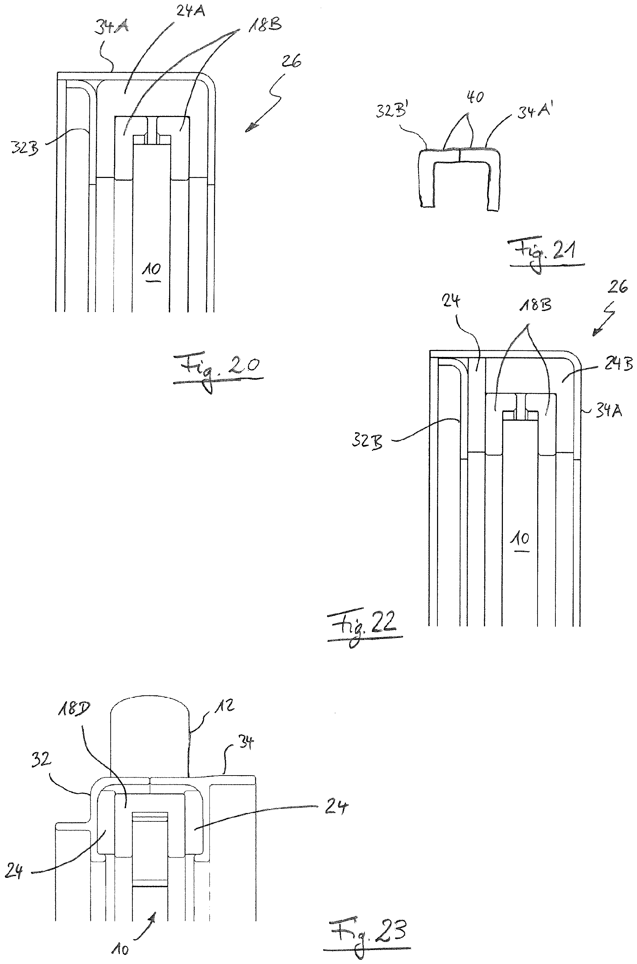

Die Heizeinrichtung 26 gemäß Fig. 20 unterscheidet sich von der Heizeinrichtung 26 gemäß Fig. 18 dahingehend, dass anstelle zwei separater Lagermatten 24 eine im Querschnitt U-förmige und den Randbereich der Heizscheibe 10 vollständig umgreifende Lagermatte 24A zum Einsatz gelangt. Diese kann auch mehreren separaten Kreissegmenten bestehen.

Eine Verpressung der Lagermatte 24A bei der Montage Heizeinrichtung 26 erfolgt lediglich oder jedenfalls hauptsächlich in axialer Richtung. Zwischen dem Gehäuseteil 34A und den Trägerringen 18B ist die Lagermatte 24A in einem kalten Zustand der Heizeinrichtung 26 nicht oder nur wenig stark verprasst, sodass eine thermische Ausdehnung der Komponenten aufgenommen werden kann. Unter Umständen kann hier auch zusätzlich ein Luftspalt vorgesehen sein.

Fig. 21 zeigt eine Variante der Gehäuseteile 32B` und 34A`, die L-förmige Gleichteile sind und die an der Stirnseite ihrer axialen Abschnitte miteinander verschweißt sind. Sie können - wie auch die anderen hier beschriebenen Gehäuseteilkonzepte - grundsätzlich einen beliebigen Aufbau eines Pakets aus Heizscheibe, Trägerelement(en)/Trägerring(en) und Lagermatte(n) aufnehmen.

Bei der Heizeinrichtung 26 gemäß Fig. 22 kommen eine Lagermatte 24, die als ebener Ring ausgebildet ist, und eine Lagermatte 24B zum Einsatz. Die Lagermatte 24B hat im Querschnitt eine L-Form und kann als Formteil bereitgestellt werden. Auch bei dieser Bauweise kann ein radiales Spiel bereitgestellt werden, wenn nämlich die Matten 24, 24B bei der Montage in radialer Richtung nicht oder nur mit moderaten Kräften beaufschlagt werden. Ein Luftspalt kann ebenfalls vorhanden sein.

Die Fig. 23 verdeutlicht, dass auch Trägerelemente 18D mit einem U-förmigen Querschnitt verwendet werden können. Diese wären dann vorteilhafterweise als getrennte Kreissegmente auszubilden, ähnlich wie die Trägerelemente 18, die in den Figuren 1 bis 4 gezeigt sind. D. h. die Trägerelemente 18 D sind in Umfangsrichtung nicht geschlossen, einerseits um eine Montage zu ermöglichen, andererseits um eine thermische Ausdehnung der Heizscheibe 10 zu ermöglichen. Die Trägerelemente 18D können optional als Gleichteile ausgebildet und/oder in Umfangsrichtung beabstandet angeordnet sein.

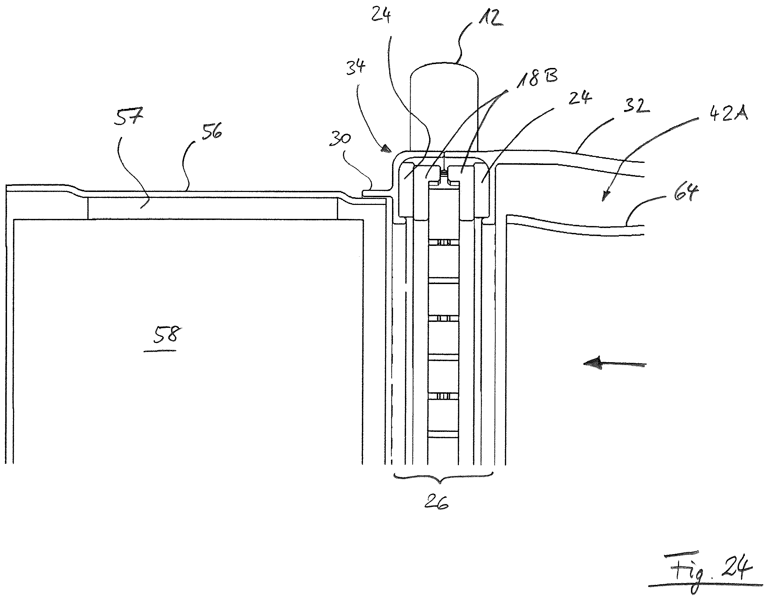

Fig. 24 zeigt einen Teil einer Abgasbehandlungseinrichtung 54 in einer Schnittansicht. Diese umfasst einen Katalysator 58, der mittels der Lagermatte 57 in einem Blechgehäuse 56 axialfest gehalten ist. Das eingangsseitige Ende des Blechgehäuses 56 ist in den Auslass 30 des Gehäuseteils 34 eingesteckt und mit diesem gasdicht verbunden. Der Aufbau aus Heizscheibe 10, Trägerringen 18B und Lagermatten 24 entspricht im Wesentlichen dem Aufbau gemäß den Fig. 8 bis 13. Das Gehäuseteil 32 ist ein Gussteil, dass gleichzeitig einen Einlasstrichter der Abgasbehandlungseinrichtung 54 bildet. In dem Einlasstrichter ist ein gasführendes Innenrohr 64 angeordnet, dass der Heizeinrichtung 26 Abgas einer Brennkraftmaschine zuführt (siehe Pfeil). Zwischen dem Innenohr 64 und dem Gehäuseteil 32 liegt ein wärmeisolierender Luftspalt 42 A vor, der Wärmeverluste minimiert und so ebenfalls zum schnelleren Aufheizen des Katalysators 58 beiträgt.

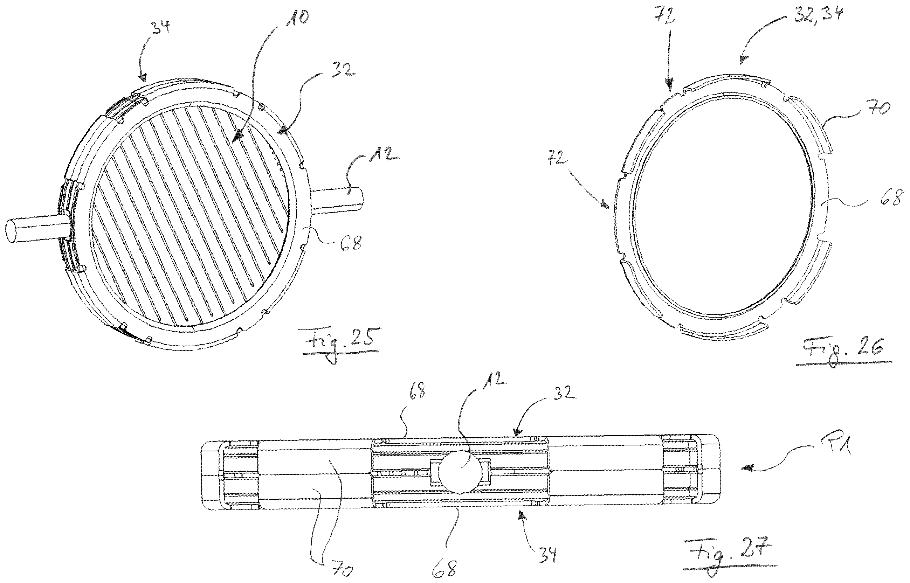

Fig. 25 zeigt eine Heizscheibe 10, die von zwei baugleichen Gehäuseteilen 32, 34 eingefasst ist, in einer perspektivischen Ansicht. Eine Seitenansicht ist in Fig. 27 zu sehen. Auf Details der Ausgestaltung der Trägereinrichtung und/oder der Lagermatten wird in diesem Zusammenhang nicht eingegangen. Diese können gemäß eine der vorstehend beschriebenen Ausführungsformen ausgestaltet bzw. angeordnet sein.

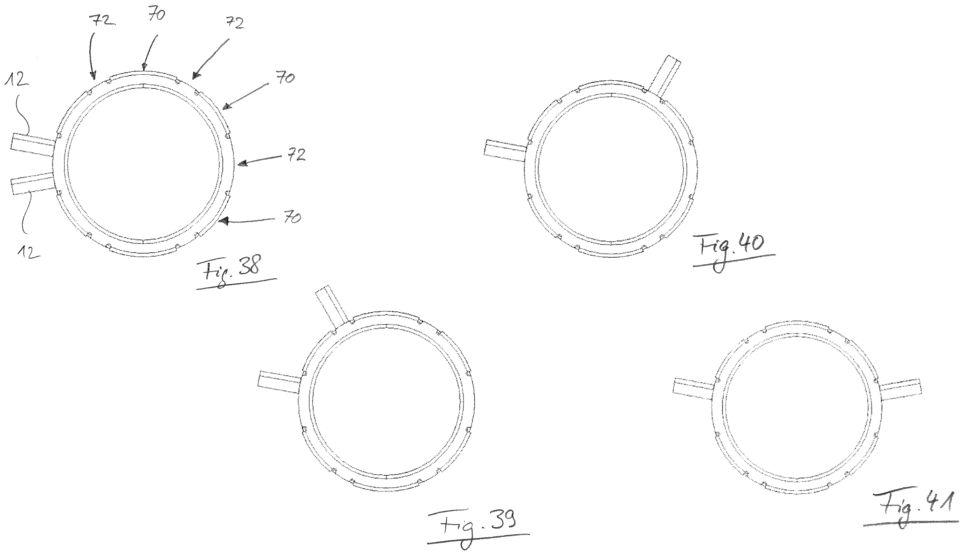

Wie insbesondere Fig. 26 zu entnehmen ist, weisen die Gehäuseteile 32, 34 jeweils einen Ringabschnitt 68, der sich im wesentlichen in einer Ebene parallel zu der Heizscheibe 10 erstreckt und der einen radial äußeren Ringbereich der Scheibe 10 abdeckt, und mehrere - im vorliegenden Beispiel - Laschen 70 auf, die sich von dem Ringabschnitt 68 in axialer Richtung erstrecken. Zwischen den Laschen 70 liegen Freischnitte 72 mit im vorliegenden Beispiel zwei unterschiedlichen Dimensionierungen. Zwei einander gegenüberliegende Freischnitte 72 sind etwas breiter als die vier anderen Freischnitte 72, beispielsweise um zwei Anschlüsse 12 aufnehmen zu können (siehe Fig. 38). Es ist aber auch möglich, alle Freischnitte 72 gleich auszuführen.

Bei der Montage werden die Gehäuseteile 32, 34 seitlich auf die mit der Trägereinrichtung und ggf. mit einer oder mehreren Lagermatten versehene Heizscheibe 10 aufgebracht, bis die Stirnseiten einander gegenüberliegender Laschen 70 miteinander in Kontakt stehen. Dann werden die Laschen 70 miteinander verbunden, insbesondere verschweißt. Die axiale Erstreckung der Laschen 70, die auch unterschiedlichen axiale Längen aufweisen können, legt fest, welchen Abstand die Ringabschnitte 68 in einem montierten Zustand voneinander haben. Dieser Abstand legt wiederum fest, wie stark die von den Gehäuseteile 32, 34 eingefassten Komponenten gehalten werden. Man spricht in diesem Zusammenhang von einer weggesteuerten Montage oder auch von einer Montage "auf Block".

Der in den Figs. 25 und Fig. 27 gezeigte Zustand ist ein Vormontagezustand (Paket P1). Die Heizscheibe 10 ist sicher gehalten und kann nun weiteren Montageschritten zugeführt werden.

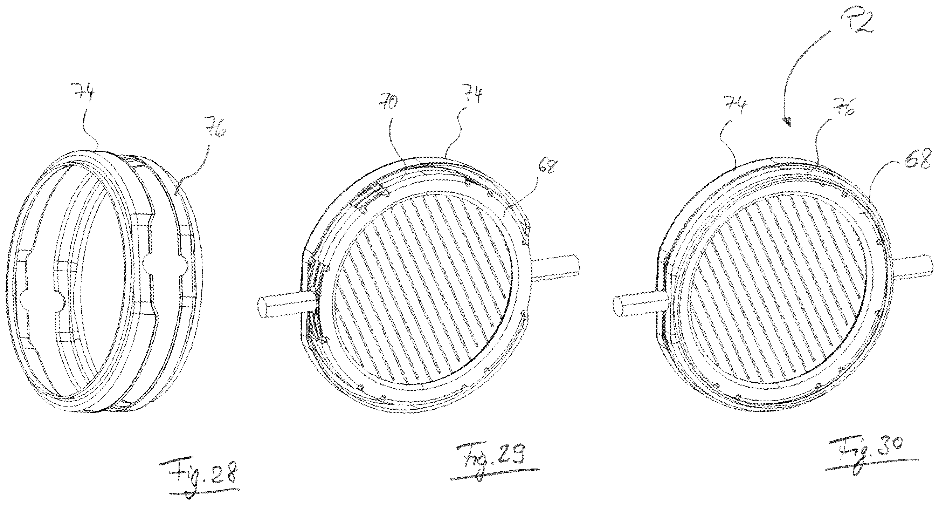

Fig. 28 zeigt Gehäuseschalen 74, 76 die das in den Figuren 25 und 27 gezeigte, vormontierte Paket P1 aufnehmen. In Fig. 29 wurde das Paket P1 in die Gehäuseschale 74 eingesetzt. Mit dem Aufsetzen der komplementären Gehäuseschale 76 und das Verbinden der Schalen 74, 76 sowie einer Befestigung des Pakets P1 an den Schalen 74 und/oder 76 wird ein weiterer Vormontagezustand erreicht, in dem die Heizscheibe 10 bereits gut geschützt und sicher gehalten ist (Paket P2). In diesem Zustand kann die das Paket P2 nun in eine Abgasanlage integriert werden. Dies ist auch in dem weiter oben beschriebenen Zustand möglich, falls die Abgasanlage Komponenten aufweist, die zur Aufnahme des P1 geeignet ausgebildet sind.

Das Verbinden der Schalen 74, 76 kann beispielsweise durch Schweißen oder einen anderen Prozess erfolgen. Eine Verbindung zwischen den Gehäuseschalen 74 und/oder 76 einerseits und den Gehäuseteilen 32 und/oder 34 andererseits kann ebenfalls durch Schweißen erfolgen. Beispielsweise werden die Schalen 74, 76 abschnittsweise mit den Ringabschnitten 68 verbunden. Dies ist ohne weiteres möglich, da entsprechende Kontaktbereiche von den Stirnseiten zugänglich sind. Zusätzlich oder alternativ ist es auch möglich, in den Gehäuseschalen 74, 76 radiale Öffnungen (nicht gezeigt), beispielsweise Langlöcher, vorzusehen, durch die ein Verschweißen der Schalen 74, 76 mit den Laschen 70 ermöglicht wird.

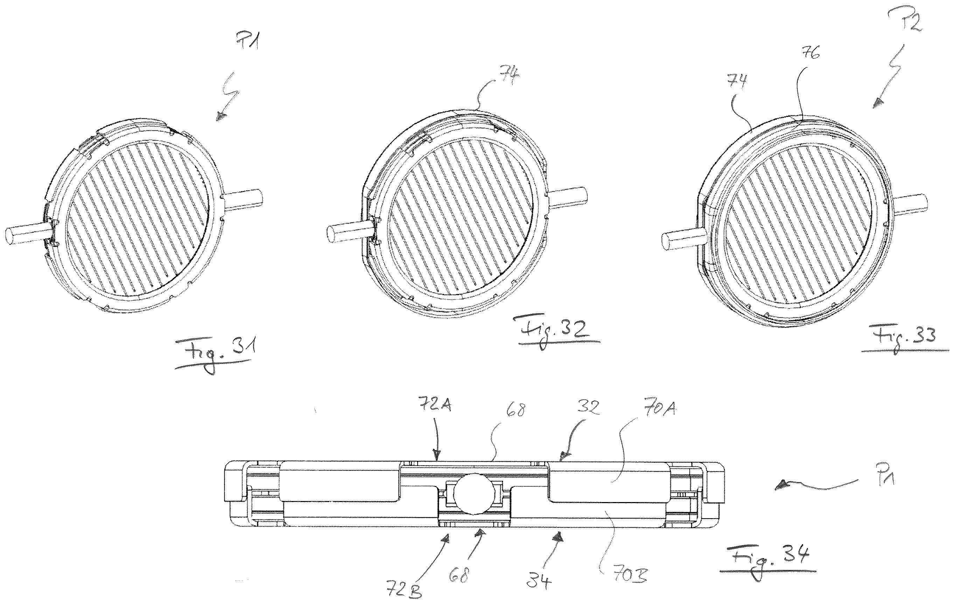

Die in den Figs. 31 bis 34 gezeigte Ausführungsform entspricht im Wesentlichen der, die in den Figuren 25, 27 und 29 bis 30 gezeigt ist. Die Schalen 74 und 76 können ähnlich oder gleich ausgeführt sein. Ein wesentlicher Unterschied ist jedoch, dass die Gehäuseteile 32, 34 keine Gleichteile sind. Sie weisen unterschiedlich ausgestaltete Laschen 70A, 70B auf, was zur Folge hat, dass sich auch die Freischnitte 72A, 72B unterscheiden. Außerdem sind die Laschen 70A, 70B nicht "auf Block". Vielmehr sind die Laschen 70B in die Laschen 70A eingesteckt. Alternativ zu einer rein kraftschlüssigen Steckverbindung können eine stoffschlüssige Verbindung (z.B. eine Schweißverbindung) oder eine formschlüssige Verbindung (z.B. mittels Rastelementen) vorgesehen sein. Kombinationen der vorstehend genannten Verbindungsarten sind ebenfalls denkbar.

Bei der vorstehend beschriebenen Bauart sorgen die Laschen 70A, 70B nicht unbedingt für eine Begrenzung der Montagebewegung. Zwar wäre es möglich, Anschlagelemente vorzusehen, die dies in wohldefinierter Weise bewirken. Allerdings wird bei der Montage in dem Ausführungsbeispiel gemäß den Fig. 31 bis 34 auf eine kraftgesteuerte Vorgehensweise zurückgegriffen. D. h. während der Montage wird die dabei in axialer Richtung aufgebrachte Kraft überwacht, sodass eine Kompression der von den Gehäuseteilen 32, 34 eingefasst Komponenten einen vorbestimmten Schwellwert nicht überschreitet. Falls Lagermatten zum Einsatz gelangen, werden diese somit gezielt komprimiert, um die gewünschte Haltekraft zu erzeugen.

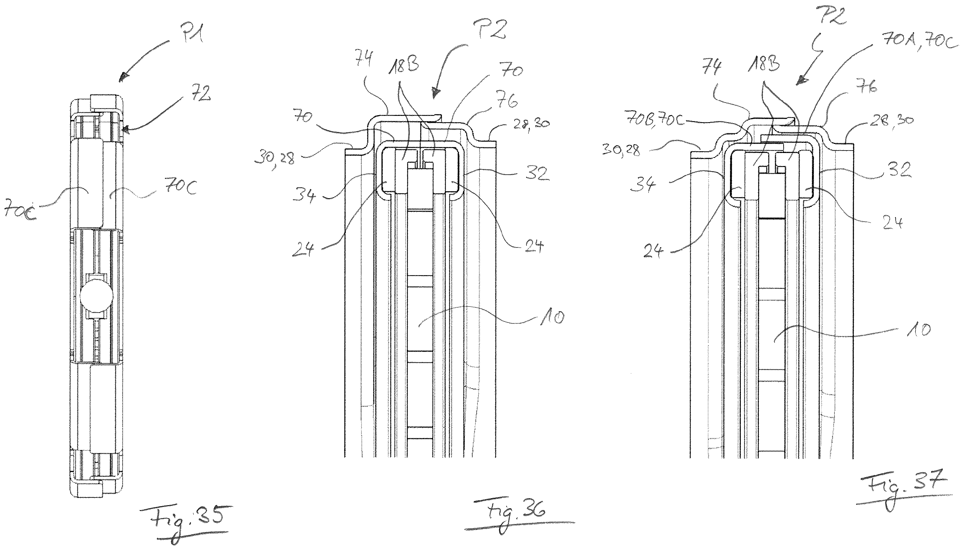

Fig. 35 zeigt eine leicht abgewandelte Variante der Ausführungsform gemäß den Figs. 31 bis 34, bei der die Laschen 70C der Gehäuseteile 32, 34 in Umfangsrichtung in etwa gleich lang und in Umfangsrichtung in gleicher Weise verteilt angeordnet sind. Die Laschen 70C der Gehäuseteilen 32, 34 sind alternierend ineinander eingesteckt, d. h bei einem Laschenpaar wird z.B. die Lasche 70C des Gehäuseteils 32 in die Lasche 70C des Gehäuseteils 34 eingesteckt, während sie bei den benachbarten Laschenpaaren auf die Lasche 70C des Gehäuseteils 34 aufgesteckt wird. Bei dieser Variante können die den Gehäuseteilen 32, 34 zugrunde liegenden Stanzteile Gleichteile sein.

Die Figs. 36 und 37 zeigen Schnitte durch Ausführungsformen mit Gehäuseteilen mit Laschen 70, die auf Stoß angeordnet sind, bzw. mit überlappenden Laschen 70A, 70B oder 70C. Der Aufbau der von den Gehäuseteilen 32, 34 gehaltenen Komponenten ist lediglich beispielhaft dargestellt. Alternative Ausführungsformen dieses Aufbaus sind denkbar. Eine Verbindung zwischen den Gehäuseschalen 74 und/oder 76 einerseits und den Gehäuseteilen 32 und/oder 34 andererseits ist nicht gezeigt.

Anhand der Figs. 38 bis 41 wird deutlich gemacht, dass die Freischnitte 72 zwischen den Laschen 70 es zulassen, die Anschlüsse 12 der Heizscheibe 10 bedarfsgerecht zu positionieren, ohne dass die Gehäuseteilen 32, 34 verändert werden müssen.

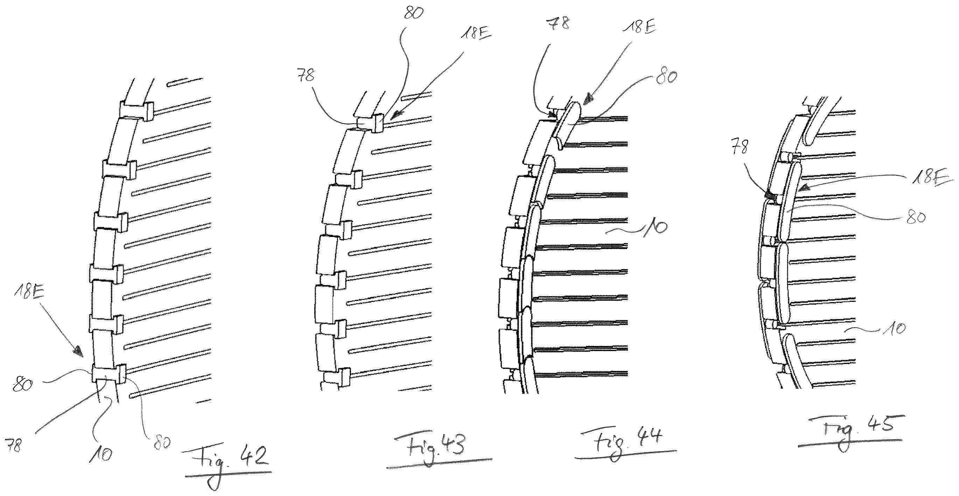

In den Figs. 42 bis 45 sind verschiedene Ausführungsformen von kompakten Trägerelementen 18E gezeigt, die miteinander kombiniert werden, um einen Kurzschluss der Heizscheibe 10 zu verhindern und deren elektrische Isolation zu gewährleisten.

Die Trägerelemente 18E gemäß Fig. 42 umfassen einen einen erweiterten Endabschnitt des jeweiligen Spalts 16 durchquerenden Abstandsabschnitt 78, der auf beiden Stirnseiten der Heizscheibe 10 aufliegende Stirnabschnitte 80 verbindet. Die Stirnabschnitte 80 decken einen (kleinen) Abschnitt eines Randbereichs der Heizscheibe 10 ab.

Die Trägerelemente 18E gemäß Fig. 43 weisen jeweils einen kürzeren Abstandsabschnitt 78 auf, der den erweiterten Endabschnitt des jeweiligen Spalts 16 nicht vollständig durchquert. Daher ist der Abstandsabschnitt 78 nur mit einem Stirnabschnitt 80 verbunden. Abweichend von dem dargestellten Ausführungsbeispiel können die Elemente 18E regelmäßig oder unregelmäßig alternierend von beiden Stirnseiten der Heizscheibe 10 in die genannten Endabschnitte eingeführt werden (siehe auch Fig. 45).

Die Trägerelemente 18E gemäß Fig. 44 weisen einen im Vergleich zu dem Ausführungsbeispiel gemäß Fig. 43 noch kürzeren Abstandsabschnitt 78 auf. Der jeweilige Stirnabschnitt 80 ist in Umfangsrichtung der Heizscheibe 10 jedoch länger, sodass der radial äußere Randbereich der Heizscheibe 10 zum größten Teil abgedeckt wird. Der Abstandsabschnitt 78 ist in Bezug auf den Stirnabschnitt 80 nicht mittig angeordnet. Es ist ferner zu sehen, dass es nicht zwingend erforderlich ist, dass sich die Stirnabschnitte 80 benachbarter Elemente 18E berühren, um eine stirnseitige Isolierung der Heizscheibe 10 zu erreichen. Bei dieser Ausführungsform können die Elemente 18E von beiden Seiten in den gleichen Endabschnitt des jeweiligen Spalts 16 eingesteckt werden, da deren Abstandsabschnitt 78 in axialer Richtung einer Erstreckung aufweist, die weniger als die Hälfte der Dicke der Heizscheibe 10 beträgt. Auch eine alternierende Anordnung der Elemente 18E ist denkbar (siehe auch Fig. 45).

Die Trägerelemente 18E gemäß Fig. 45 weisen jeweils einen Abstandsabschnitt 78 auf, der im Wesentlichen dem der Trägerelemente 18E gemäß Fig. 44 gleicht. Der Abstandsabschnitt 78 ist in Bezug auf den Stirnabschnitt 80 allerdings mittig angeordnet. Durch eine alternierende Anordnung der Trägerelemente 18E, die abwechselnd von beiden Stirnseiten der Heizscheibe 10 eingesteckt werden, wird deren Randbereich zum größten Teil abgedeckt.

Es versteht sich, dass einzelne Merkmale, die anhand bestimmter Ausführungsformen näher erläutert wurden, sich bei Bedarf auch auf andere Ausführungsformen übertragen lassen, um den jeweils vorliegenden Anforderungen optimal Rechnung tragen zu können.

Das erfindungsgemäße Konzept wurde vorstehend zwar in Bezug auf die Abgastechnik einer Brennkraftmaschine beschrieben. Es lässt sich jedoch auch in anderen Bereichen anwenden, in denen ein Erhitzung eines Gasstroms erforderlich ist.

### Bezugszeichenliste

- 10: Heizscheibe
- 12: Anschluss
- 14: Heizsegment
- 16: Spalt
- 18, 18D, 18E: Trägerelement
- 18A, 18B, 18C: Trägerring
- 20: Abstandshalter
- 24, 24A, 24B: Lagermatte
- 26: Heizeinrichtung
- 28: Einlass
- 30: Auslass
- 32, 32A, 32B, 32B' 34, 34A, 34A': Gehäuseteil
- 36: axiale Schulter
- 38: axialer Überstand
- 40: axialer Abschnitt
- 42, 42A: Luftspalt
- 44: Fortsatz
- 46: Anlagefläche
- 48: Umfangswand
- 50: Anschlussausnehmung
- 52: Abstand
- 54: Abgasbehandlungseinrichtung
- 56: Blechgehäuse
- 57: Lagermatte
- 58: Katalysator
- 60, 60A: Schweißnaht
- 62: Schulter
- 64: Innenohr
- 68: Ringabschnitt
- 70, 70A, 70B, 70C: Lasche
- 72, 72A, 72B: Freischnitt
- 74, 76: Gehäuseschalen
- 78: Abstandsabschnitt
- 80: Stirnabschnitt
- A: Axialrichtung
- P1, P2: Paket

## Patentansprüche

1. Heizeinrichtung zum Beheizen eines Gasstroms, insbesondere eines Abgasstroms einer Brennkraftmaschine, umfassend
ein in axialer Richtung von dem Gasstrom durchströmbares, elektrisch leitfähiges Heizelement (10), das zumindest zwei Heizsegmente (14) aufweist, die abschnittsweise durch einen Spalt (16) voneinander getrennt sind, der insbesondere einseitig offen ist,
eine Trägereinrichtung mit zumindest einem elektrisch isolierendem Trägerelement (18A, 18B, 18C, 18D, 18E), wobei das Trägerelement (18A, 18B, 18C, 18D, 18E) zumindest einen Abstandsabschnitt (20) aufweist, der in den Spalt (16) ragt, und
einen Gehäuseabschnitt (32, 32A, 32B, 32B', 34, 34A, 34A') in dem das Heizelement (10) und die Trägereinrichtung gehalten sind,
**dadurch gekennzeichnet, dass**
das elektrisch isolierende Trägerelement (18A, 18B, 18C, 18D, 18E) einen Randbereich zumindest einer axialen Stirnseite des Heizelements (10) zumindest abschnittsweise abdeckt.

2. Heizeinrichtung nach Anspruch 1,
wobei sich der Abstandsabschnitt (20, 78) in axialer Richtung und/oder einer Richtung senkrecht zu der axialen Richtung von dem Trägerelement (18A, 18B, 18C, 18D, 18E) in den Spalt (16) erstreckt.

3. Heizeinrichtung nach Anspruch 1 oder 2,
wobei das Trägerelement (18A, 18B, 18C bzw. 18D) ringartig ausgestaltet ist oder eine Grundform eines Kreissegments aufweist.

4. Heizeinrichtung nach zumindest einem der vorstehenden Ansprüche,
wobei die Trägereinrichtung (18A, 18B, 18C, 18D, 18E) mehrstückig ausgebildet ist, insbesondere wobei die Trägereinrichtung (18A, 18B, 18D, 18E) ein erstes Trägerelement und ein zweites Trägerelement umfasst, die jeweils zumindest einen Teil des Umfangs des Heizelements umgegeben und/oder die jeweils zumindest einen Teil eines Randbereichs zumindest einer Stirnseite des Heizelements abdecken, wobei das erste und das zweite Trägerelement bevorzugt Gleichteile (18B, 18D, 18E) sind.

5. Heizeinrichtung nach zumindest einem der vorstehenden Ansprüche,
wobei sich das Heizelement (10) über eine Lagermatte (24, 24A, 24B) an dem Gehäuseabschnitt (32, 32A, 32B, 32B', 34, 34A, 34A') abstützt, insbesondere in axialer Richtung und/oder wobei sich die Trägereinrichtung (18A, 18B, 18D, 18E) über eine Lagermatte (24, 24A, 24B) an dem Gehäuseabschnitt (32, 32A, 32B, 32B', 34, 34A, 34A') abstützt, insbesondere in axialer Richtung.

6. Heizeinrichtung nach zumindest einem der vorstehenden Ansprüche,
wobei zwischen der Trägereinrichtung (18A, 18B, 18D, 18E) und/oder dem Heizelement (10) einerseits und dem Gehäuseabschnitt (32, 32A, 32B, 32B', 34, 34A, 34A') andererseits in radialer Richtung zumindest in einem kalten Zustand des Heizelements ein Spiel besteht.

7. Heizeinrichtung nach zumindest einem der vorstehenden Ansprüche,
wobei das Heizelement (10) eine wabenförmige Grundstruktur aufweist oder wobei das Heizelement (10) eine Mehrzahl von Spalten (16) aufweist, die bevorzugt parallel angeordnet sind und/oder die sich in einer Richtung parallel zu einer Stirnseite des Heizelements alternierend von einander gegenüber liegenden Seiten des Heizelements in dessen Inneres ragen.

8. Heizeinrichtung nach zumindest einem der vorstehenden Ansprüche,
wobei der Gehäuseabschnitt (32, 32A, 32B, 32B', 34, 34A, 34A') mehrteilig ausgebildet ist, insbesondere wobei der Gehäuseabschnitt ein erstes Gehäuseelement (32, 32A, 32B, 32B`) und ein zweites Gehäuseelement (34, 34A, 34A') umfasst, zwischen denen die Trägereinrichtung (18A, 18B, 18D, 18E) mit dem Heizelement (10) gehalten sind, wobei das erste Gehäuseelement (32, 32A, 32B, 32B`) und/oder das zweite Gehäuseelement (34, 34A, 34A') und/oder die Trägereinrichtung und/oder das erste Trägerelement (18B) und/oder das zweite Trägerelement (18B) in einem Querschnitt bevorzugt L-förmig ausgebildet sind.

9. Heizeinrichtung nach Anspruch 8,
wobei das erste Gehäuseelement (32, 32A, 32B, 32B`) und/oder das zweite Gehäuseelement (34, 34A, 34A') einen Anschlussabschnitt (28 bzw. 30) aufweisen, mittels derer der Gehäuseabschnitt mit weiteren gasführenden Komponenten verbindbar ist und/oder wobei das erste Gehäuseelement (32A, 32B) in das zweite Gehäuseelement (34A) eingesteckt ist.

10. Heizeinrichtung nach zumindest einem der vorstehenden Ansprüche 8 oder 9,
wobei das erste Gehäuseelement (32, 32A, 32B, 32B`) und/oder das zweite Gehäuseelement (34, 34A, 34A') Blechbauteile sind und/oder wobei das erste Gehäuseelement (32) und/oder das zweite Gehäuseelement (34) Gussteile sind.

11. Heizeinrichtung nach zumindest einem der vorstehenden Ansprüche,
wobei der Gehäuseabschnitt (32, 32A, 32B, 32B', 34, 34A, 34A') von einem Außengehäuse (56, 74, 76) gehalten ist, das den Gehäuseabschnitt in radialer Richtung umgibt, insbesondere wobei das Außengehäuse ein erstes Außengehäuseelement (74, 76) und ein zweites Außengehäuseelement (76 bzw. 74) umfasst, insbesondere wobei das erste Außengehäuseelement und das zweite Außengehäuseelement Blechbauteile sind.

12. Heizeinrichtung nach zumindest einem der vorstehenden Ansprüche,
wobei das Trägerelement (18A, 18B, 18C, 18D, 18E) zumindest abschnittsweise, insbesondere vollständig aus Korund und/oder einem elektrisch isolierenden Keramikwerkstoff gefertigt ist.

13. Abgasbehandlungseinrichtung mit einem Einlass und einem Auslass und mit zumindest einer Abgasbehandlungseinheit (58) zur Behandlung eines Abgasstroms, insbesondere mit einer Katalysatoreinheit, wobei eine Heizeinrichtung (26) gemäß zumindest einem der vorstehenden Ansprüche zwischen dem Einlass (28) und der Abgasbehandlungseinheit angeordnet ist, insbesondere unmittelbar in Strömungsrichtung des Abgases vor der Abgasbehandlungseinheit, insbesondere wobei ein einstückiges Gehäusebauteil (56) vorgesehen ist, das die Abgasbehandlungseinheit (58) und die Heizeinrichtung (10) aufnimmt.

14. Abgasbehandlungseinrichtung nach Anspruch 13,
wobei der Gehäuseabschnitt (32, 34) der Heizeinrichtung (26) einen Teil eines Gehäuses der Abgasbehandlungseinrichtung (58) bildet, insbesondere wobei der Einlass der Abgasbehandlungseinrichtung mit einem Bauteil (34) des Gehäuseabschnitts verbunden ist.

15. Abgasbehandlungseinrichtung nach Anspruch 13 mit einer Heizeinrichtung gemäß Anspruch 11, wobei das Außengehäuse (56, 74, 76) einen Einlassanschlussabschnitt zur Verbindung der Heizeinrichtung mit einem Rohrabschnitt einer Abgasanlage aufweist, der den Einlass bildet, und wobei das Außengehäuse (56, 74, 76) einen Auslassanschlussabschnitt aufweist, der mit einem die Abgasbehandlungseinheit aufnehmenden Gehäusebauteil verbunden ist.

## Claims

1. A heating device for heating a gas flow, in particular an exhaust gas flow of an internal combustion engine, said heating device comprising
an electrically conductive heating element (10) which can be flowed through by the gas flow in an axial direction and which has at least two heating segments (14) which are sectionally separated from one another by a gap (16) which is in particular open at one side;
a carrier device having at least one electrically insulating carrier element (18A, 18B, 18C, 18D, 18E), wherein the carrier element (18A, 18B, 18C, 18D, 18E) has at least one spacer section (20) which projects into the gap (16); and
a housing section (32, 32A, 32B, 32B', 34, 34A, 34A') in which the heating element (10) and the carrier device are held,
**characterized in that**
the electrically insulating carrier element (18A, 18B, 18C, 18D, 18E) at least sectionally covers a marginal region of at least one end face of the heating element (10).

2. A heating device according to claim 1,
wherein the spacer section (20, 78) extends in the axial direction and/or in a direction perpendicular to the axial direction from the carrier element (18A, 18B, 18C, 18D, 18E) into the gap (16).

3. A heating device according to claim 1 or 2,
wherein the carrier element (18A, 18B, 18C or 18D) is of a ring-like design or has a basic shape of a circular segment.

4. A heating device according to at least one of the preceding claims,
wherein the carrier device (18A, 18B, 18C, 18D, 18E) is formed in multiple pieces, in particular wherein the carrier device (18A, 18B, 18D, 18E) comprises a first carrier element and a second carrier element which each surround at least a part of the periphery of the heating element and/or which each cover at least a part of a marginal region of at least one end face of the heating element, wherein the first carrier element and the second carrier element are preferably identical parts (18B, 18D, 18E).

5. A heating device according to at least one of the preceding claims,
wherein the heating element (10) is supported at the housing section (32, 32A, 32B, 32B', 34, 34A, 34A'), in particular in the axial direction, via a bearing mat (24, 24A, 24B) and/or wherein the carrier device (18A, 18B, 18D, 18E) is supported at the housing section (32, 32A, 32B, 32B', 34, 34A, 34A'), in particular in the axial direction, via a bearing mat (24, 24A, 24B).

6. A heating device according to at least one of the preceding claims,
wherein a clearance exists between the carrier device (18A, 18B, 18D, 18E) and/or the heating element (10), on the one hand, and the housing section (32, 32A, 32B, 32B', 34, 34A, 34A'), on the other hand, in a radial direction at least in a cold state of the heating element.

7. A heating device according to at least one of the preceding claims,
wherein the heating element (10) has a honeycomb basic structure or wherein the heating element (10) has a plurality of gaps (16) which are preferably arranged in parallel and/or which project in a direction in parallel with an end face of the heating element, alternately from mutually oppositely disposed sides of the heating element, into the interior of the heating element.

8. A heating device according to at least one of the preceding claims,
wherein the housing section (32, 32A, 32B, 32B', 34, 34A, 34A') is formed in multiple parts, in particular wherein the housing section comprises a first housing element (32, 32A, 32B, 32B') and a second housing element (34, 34A, 34A') between which the carrier device (18A, 18B, 18D, 18E) is held with the heating element (10), wherein the first housing element (32, 32A, 32B, 32B') and/or the second housing element (34, 34A, 34A') and/or the carrier device and/or the first carrier element (18B) and/or the second carrier element (18B) are preferably L-shaped in a cross-section.

9. A heating device according to claim 8,
wherein the first housing element (32, 32A, 32B, 32B') and/or the second housing element (34, 34A, 34A') has/have a connection section (28 or 30) by means of which the housing section can be connected to further gas-conducting components and/or wherein the first housing element (32A, 32B) is plugged into the second housing element (34A).

10. A heating device according to at least one of the claims 8 or 9,
wherein the first housing element (32, 32A, 32B, 32B') and/or the second housing element (34, 34A, 34A') is/are sheet metal components and/or wherein the first housing element (32) and/or the second housing element (34) is/are cast parts.

11. A heating device according to at least one of the claims 14 to 18,
wherein the housing section (32, 32A, 32B, 32B', 34, 34A, 34A') is held by an outer housing (56, 74, 76) which surrounds the housing section in the radial direction, in particular wherein the outer housing comprises a first outer housing element (74, 76) and a second outer housing element (76 or 74), in particular wherein the first outer housing element and the second outer housing element are sheet metal components.

12. A heating device according to at least one of the preceding claims,
wherein the carrier element (18A, 18B, 18C, 18D, 18E) is at least sectionally produced, in particular completely produced, from corundum and/or an electrically insulating ceramic material.

13. An exhaust gas treatment device comprising an inlet and an outlet and at least one exhaust gas treatment unit (58) for treating an exhaust gas flow, in particular a catalytic converter unit, wherein a heating device (26) according to at least one of the preceding claims is arranged between the inlet (28) and the exhaust gas treatment unit, in particular directly in the flow direction of the exhaust gas upstream of the exhaust gas treatment unit, in particular wherein a single-piece housing component (56) is provided that receives the exhaust gas treatment unit (58) and the heating device (10).

14. An exhaust gas treatment device according to claim 13,
wherein the housing section (32, 34) of the heating device (26) forms a part of a housing of the exhaust gas treatment device (58), in particular wherein the inlet of the exhaust gas treatment device is connected to a component (34) of the housing section.

15. An exhaust gas treatment device according to claim 13 comprising a heating device according to claim 11, wherein the outer housing (56, 74, 76) has an inlet connection section for connecting the heating device to a tube section of an exhaust gas system which forms the inlet, and wherein the outer housing (56, 74, 76) has an outlet connection section which is connected to a housing component receiving the exhaust gas treatment unit.

## Revendications

1. Dispositif de chauffage pour chauffer un flux de gaz, en particulier un flux de gaz d'échappement d'un moteur à combustion interne, comprenant :
un élément chauffant (10) électriquement conducteur pouvant être traversé par le flux de gaz dans la direction axiale, qui présente au moins deux segments chauffants (14) qui sont séparés l'un de l'autre sur certaines sections par une fente (16) qui est ouverte en particulier d'un côté,
un dispositif de support avec au moins un élément de support électriquement isolant (18A, 18B, 18C, 18D, 18E), l'élément de support (18A, 18B, 18C, 18D, 18E) présentant au moins une section d'espacement (20) qui fait saillie dans la fente (16), et
une section boîtier (32, 32A, 32B, 32B', 34, 34A, 34A') dans laquelle l'élément chauffant (10) et le dispositif de support sont maintenus,
**caractérisé en ce que**
l'élément de support électriquement isolant (18A, 18B, 18C, 18D, 18E) recouvre au moins sur certaines sections une zone de bordure d'au moins une face frontale axiale de l'élément chauffant (10).

2. Dispositif de chauffage selon la revendication 1,
dans lequel la section d'espacement (20, 78) s'étend dans la direction axiale et/ou dans une direction perpendiculaire à la direction axiale depuis l'élément de support (18A, 18B, 18C, 18D, 18E) dans la fente (16).

3. Dispositif de chauffage selon la revendication 1 ou 2,
dans lequel l'élément de support (18A, 18B, 18C ou 18D) est réalisé en forme d'anneau ou présente une forme de base d'un segment de cercle.

4. Dispositif de chauffage selon au moins l'une des revendications précédentes,
dans lequel le dispositif de support (18A, 18B, 18C, 18D, 18E) est réalisé en plusieurs pièces, en particulier dans lequel le dispositif de support (18A, 18B, 18D, 18E) comprend un premier élément de support et un deuxième élément de support qui entourent chacun au moins une partie de la périphérie de l'élément de chauffage et/ou qui recouvrent chacun au moins une partie d'une zone de bordure d'au moins une face frontale de l'élément de chauffage, le premier et le deuxième élément de support étant de préférence des pièces identiques (18B, 18D, 18E).

5. Dispositif de chauffage selon au moins l'une des revendications précédentes,
dans lequel l'élément chauffant (10) s'appuie sur la section boîtier (32, 32A, 32B, 32B', 34, 34A, 34A') par l'intermédiaire d'une natte de montage (24, 24A, 24B), en particulier dans la direction axiale et/ou dans lequel le dispositif de support (18A, 18B, 18D, 18E) s'appuie sur la section boîtier (32, 32A, 32B, 32B', 34, 34A, 34A') par l'intermédiaire d'une natte de montage (24, 24A, 24B), en particulier dans la direction axiale.

6. Dispositif de chauffage selon au moins l'une des revendications précédentes,
dans lequel il existe un jeu entre le dispositif de support (18A, 18B, 18D, 18E) et/ou l'élément chauffant (10) d'une part et la section boîtier (32, 32A, 32B, 32B', 34, 34A, 34A') d'autre part dans la direction radiale au moins dans un état froid de l'élément chauffant.

7. Dispositif de chauffage selon au moins l'une des revendications précédentes,
dans lequel l'élément chauffant (10) présente une structure de base en nid d'abeilles ou dans lequel l'élément chauffant (10) présente une pluralité de fentes (16) qui sont de préférence disposées parallèlement et/ou qui s'étendent dans une direction parallèle à une face frontale de l'élément chauffant en alternance depuis des côtés opposés de l'élément chauffant vers l'intérieur de celui-ci.

8. Dispositif de chauffage selon au moins l'une des revendications précédentes,
dans lequel la section boîtier (32, 32A, 32B, 32B', 34, 34A, 34A') est réalisée en plusieurs parties, en particulier dans lequel la section boîtier comprend un premier élément de boîtier (32, 32A, 32B, 32B') et un deuxième élément de boîtier (34, 34A, 34A'), entre lesquels le dispositif de support (18A, 18B, 18D, 18E) avec l'élément chauffant (10) est maintenu, le premier élément de boîtier (32, 32A, 32B, 32B') et/ou le deuxième élément de boîtier (34, 34A, 34A') et/ou le dispositif de support et/ou le premier élément de support (18B) et/ou le deuxième élément de support (18B) étant réalisés de préférence en forme de L en coupe transversale.

9. Dispositif de chauffage selon la revendication 8,
dans lequel le premier élément de boîtier (32, 32A, 32B, 32B') et/ou le deuxième élément de boîtier (34, 34A, 34A') présentent une section de raccordement (28, respectivement 30) au moyen de laquelle la section boîtier peut être reliée à d'autres composants conducteurs de gaz et/ou dans lequel le premier élément de boîtier (32A, 32B) est enfiché dans le deuxième élément de boîtier (34A).

10. Dispositif de chauffage selon au moins l'une des revendications 8 ou 9 précédentes,
dans lequel le premier élément de boîtier (32, 32A, 32B, 32B') et/ou le deuxième élément de boîtier (34, 34A, 34A') sont des composants en tôle et/ou dans lequel le premier élément de boîtier (32) et/ou le deuxième élément de boîtier (34) sont des pièces coulées.

11. Dispositif de chauffage selon au moins l'une des revendications précédentes,
dans lequel la section boîtier (32, 32A, 32B, 32B', 34, 34A, 34A') est maintenue par un boîtier extérieur (56, 74, 76) qui entoure la section boîtier dans la direction radiale, en particulier dans lequel le boîtier extérieur comprend un premier élément de boîtier extérieur (74, 76) et un deuxième élément de boîtier extérieur (76, respectivement 74), en particulier dans lequel le premier élément de boîtier extérieur et le deuxième élément de boîtier extérieur sont des composants en tôle.

12. Dispositif de chauffage selon au moins l'une des revendications précédentes,
dans lequel l'élément de support (18A, 18B, 18C, 18D, 18E) est fabriqué au moins sur certaines sections, en particulier entièrement, en corindon et/ou en un matériau céramique électriquement isolant.

13. Dispositif de traitement des gaz d'échappement comportant une entrée et une sortie et au moins une unité de traitement des gaz d'échappement (58) pour le traitement d'un flux de gaz d'échappement, en particulier avec une unité de catalyseur, dans lequel un dispositif de chauffage (26) selon au moins l'une des revendications précédentes est disposé entre l'entrée (28) et l'unité de traitement des gaz d'échappement, en particulier directement en amont de l'unité de traitement des gaz d'échappement dans le sens d'écoulement des gaz d'échappement, en particulier dans lequel il est prévu un composant formant boîtier d'une seule pièce (56) qui reçoit l'unité de traitement des gaz d'échappement (58) et le dispositif de chauffage (10).

14. Dispositif de traitement des gaz d'échappement selon la revendication 13,
dans lequel la section boîtier (32, 34) du dispositif de chauffage (26) forme une partie d'un boîtier du dispositif de traitement des gaz d'échappement (58), en particulier dans lequel l'entrée du dispositif de traitement des gaz d'échappement est reliée à un composant (34) de la section boîtier.

15. Dispositif de traitement des gaz d'échappement selon la revendication 13 comportant un dispositif de chauffage selon la revendication 11,
dans lequel le boîtier extérieur (56, 74, 76) comprend une section de raccordement d'entrée pour relier le dispositif de chauffage à une section de tuyau d'un système d'échappement qui forme l'entrée, et dans lequel le boîtier extérieur (56, 74, 76) comprend une section de raccordement de sortie qui est reliée à un composant formant boîtier recevant l'unité de traitement des gaz d'échappement.
